# EUROPEAN PATENT APPLICATION

(11) **EP 4 718 516 A1**
(43) Date of publication of application: **01.04.2026**
(21) Application number: 25200771.1
(22) Date of filing: 08.09.2025
(51) Int. Cl.: H01M 4/133, H01M 4/134, H01M 4/1393, H01M 4/1395, H01M 4/1397, H01M 4/62, H01M 4/36, H01M 4/38, H01M 4/587, H01M 10/0525, C01B 32/00, H01M 4/04, C01B 32/20, C01B 33/00, C01B 33/113, C01D 3/02, C01D 15/00

(54) **NEGATIVE ELECTRODE OF SECONDARY BATTERY, MANUFACTURING METHOD OF NEGATIVE ELECTRODE, AND SECONDARY BATTERY WITH NEGATIVE ELECTRODE**

(30) Priority: 27.09.2024 JP 2024169494
(71) Applicant: Prime Planet Energy & Solutions, Inc., Chuo-ku, Tokyo 103-0022 (JP)
(72) Inventor: KANG, Surim, Tokyo, 103-0022 (JP)
(74) Representative: Kuhnen & Wacker Patent- und Rechtsanwaltsbüro PartG mbB

(57) **Abstract**

Provided is a technique to suppress a swell of the negative electrode. In the negative electrode disclosed herein, a negative electrode active material layer includes a first layer at a negative electrode current collector side and a second layer at a surface layer side. The first layer contains first Si-containing particles. The second layer contains second Si-containing particles. A Si content rate of the second Si-containing particles is smaller than a Si content rate of the first Si-containing particles. Each of the first Si-containing particles and the second Si-containing particles include a LiF coating layer. A second peak intensity ratio relating to a LiF of the second Si-containing particles is smaller than a first peak intensity ratio relating to the LiF of the first Si-containing particles. A difference between the first peak intensity ratio and the second peak intensity ratio is 0.050 to 1.00.

## Description

### BACKGROUND OF THE DISCLOSURE

### 1. Technical Field

A present disclosure relates to a negative electrode of a secondary battery, and a manufacturing method of the negative electrode. The present disclosure also relates to the secondary battery in which this negative electrode is used.

### 2. Background

Recently, a secondary battery is suitably used for a portable power supply of a personal computer, a portable terminal, or the like, for a power supply of driving automobiles, such as battery electric vehicle (BEV), hybrid electric vehicle (HEV), and plug-in hybrid electric vehicle (PHEV), or the like.

Regarding a purpose of the power supply for driving automobiles, especially regarding a purpose of the power supply for driving the BEV, from a perspective of extending a driving distance of the vehicle, it is desired to make the secondary battery have a higher capacity. As a negative electrode active material whose capacity is high, a Si-containing particle is known, and it is known, with the Si-containing particle, to be able to make the secondary battery have the higher capacity.

Japanese Patent Application Publication No. 2010-33830 discloses a negative electrode that consists of a negative electrode, a positive electrode, and a nonaqueous electrolyte having a lithium ion electrically conductive property and that is used for a nonaqueous electrolyte secondary battery. The negative electrode includes a current collector and a negative electrode active material. The negative electrode active material includes an active material composite particle that contains at least 2 kinds of elemental silicons, silicon chemical compounds, and carbons whose particle size distributions are different from each other. A specific surface area size of the active material composite particle is equal to or more than 5 m²/g and not more than 50 m²/g. This document describes that, according to the configuration described above, it is possible to enhance an electrical charge and discharge cycle characteristic, suppress a drastic capacity reduction at the electrical charge and discharge cycle time, and implement improving a high-rate characteristic.

A composite particle disclosed in Japanese Patent Application Publication No. 2019-522886 contains a carbon material, a silicon, and a lithium fluoride (LiF), and is configured with a carbon phase consisting of the carbon material and a Si-LiF mix particle. The Si-LiF mix particle is dispersed into the carbon phase at an uniform or ununiform distribution. This document describes that, by a negative electrode containing the composite particle described above, it is possible to improve a life property of a battery.

Japanese Patent Application Publication No. 2015-537347 discloses a multilayer electrode that includes an electrically conductive layer, a first composite electrode layer, and a second composite electrode layer, in this order. Each composite electrode layer contains a particle-shaped material suitable for being used as an active material of a metal ion battery and contains a binder. A main component of the active material in the first composite electrode layer is a material that is different from a main component of an active material of the second composite electrode layer. This document describes that, according to the configuration described above, it is possible to improve both of a capacity maintenance rate of the battery and a cycle life.

### SUMMARY

Anyway, the Si-containing particles have a property that an expansion and contraction at an electrical charge and discharge time is large. The secondary battery in which the Si-containing particles are used has a problem that, when the electrical charge and the electrical discharge are repeated, as the negative electrode is repeatedly expanded and contracted, the negative electrode is expanded and thus an inside stress is increased. Therefore, it is demanded to develop a negative electrode whose swell is smaller when the electrical charge and the electrical discharge are repeated.

In view of the above described circumstance, the present disclosure has an object for the negative electrode containing Si-containing particles to suppress the swell of the negative electrode when the electrical charge and the electrical discharge are repeated.

A negative electrode of a secondary battery of the present disclosure includes a negative electrode current collector, and a negative electrode active material layer. The negative electrode active material layer is supported by the negative electrode current collector. The negative electrode active material layer includes a first layer positioned at a side of the negative electrode current collector and a second layer positioned at a surface layer side. The first layer contains first Si-containing particles as a negative electrode active material. The second layer contains second Si-containing particles as a negative electrode active material. A Si content rate of the second Si-containing particles is smaller than a Si content rate of the first Si-containing particles. Each of the first Si-containing particles and the second Si-containing particles includes a LiF coating layer. On an XPS spectrum of the first Si-containing particles measured by an XPS, a ratio of a peak intensity of an F of a LiF with respect to the peak intensity of the F of one being other than the LiF is defined as a first peak intensity ratio. On the XPS spectrum of the second Si-containing particles, the ratio of the peak intensity of the F of the LiF with respect to the peak intensity of the F of one being other than the LiF is defined as a second peak intensity ratio. The second peak intensity ratio is smaller than the first peak intensity ratio. A difference between the first peak intensity ratio and the second peak intensity ratio is 0.050 to 1.00. In accordance with such a configuration, regarding the negative electrode containing Si-containing particles, it is possible to suppress the swell of the negative electrode when the electrical charge and the electrical discharge are repeated.

From another aspect, a manufacturing method of the negative electrode of the secondary battery of the present disclosure includes: preparing a first paste that contains first Si-containing particles as a negative electrode active material and contains a dispersion medium; preparing a second paste that contains second Si-containing particles as the negative electrode active material and contains the dispersion medium; applying the first paste to coat a negative electrode current collector and to dry so as to form a dry layer of the first paste; applying the second paste to coat the dry layer of the first paste and to dry so as to form a dry layer of the second paste; and pressing the dry layer of the first paste and the dry layer of the second paste. A Si content rate of the second Si-containing particles is smaller than a Si content rate of the first Si-containing particles. Each of the first Si-containing particles and the second Si-containing particles includes a LiF coating layer. On an XPS spectrum of the first Si-containing particles measured by an XPS, a ratio of a peak intensity of an F of a LiF with respect to the peak intensity of the F of one being other than the LiF is defined as a first peak intensity ratio. On the XPS spectrum of the second Si-containing particles, the ratio of the peak intensity of the F of the LiF with respect to the peak intensity of the F of one being other than the LiF is defined as a second peak intensity ratio. The second peak intensity ratio is smaller than the first peak intensity ratio. The difference between the first peak intensity ratio and the second peak intensity ratio is 0.050 to 1.00. In accordance with such a configuration, it is possible to provide the negative electrode which contains Si-containing particles and in which the swell can be suppressed when the electrical charge and the electrical discharge are repeated.

From another aspect, the secondary battery of the present disclosure includes a positive electrode, a negative electrode, and an electrolyte. The negative electrode is the above described negative electrode. By including such a configuration, regarding the negative electrode containing Si-containing particles, it is possible to suppress the swell of the negative electrode when the electrical charge and the electrical discharge are repeated.

### BRIEF DESCRIPTION OF THE DRAWINGS

FIG. 1 is a cross section view that schematically shows a configuration of a negative electrode of a secondary battery in accordance with one embodiment of the present disclosure.
FIG. 2 is a cross section view that schematically shows a configuration of a particle of a negative electrode active material contained in a negative electrode active material layer of the negative electrode shown by FIG. 1.
FIG. 3 is a cross section view that schematically shows a configuration of a lithium ion secondary battery constructed with the negative electrode of the secondary battery in accordance with one embodiment of the present disclosure.
FIG. 4 is a schematic exploded view that shows a configuration of a wound electrode assembly of the lithium ion secondary battery shown by FIG. 3.

### DESCRIPTION OF THE EMBODIMENTS

Below, while referring to drawings, an embodiment in accordance with the present disclosure would be explained. Incidentally, a matter not described in the present description but required for performing the present disclosure can be grasped as design matters of those skilled in the art based on the related art in the present field. The present disclosure can be executed based on the contents disclosed in the present description, and the technical common sense in the present field. In the following drawings, the same numerals and signs are given to the members/parts providing the same effect. In each drawing, the dimensional relation (a length, a width, a thickness, or the like) does not always reflect the actual dimensional relation. Incidentally, a numerical value range represented as "A to B" in the present description can contain A and B.

Incidentally, the term "secondary battery" in the present description represents an electricity storage device being capable of repeatedly charging and discharging. The term "lithium ion secondary battery" in the present description represents a secondary battery that uses a lithium ion as a charge carrier and implements an electrical charge and discharge by movement of the lithium ion between a positive electrode and the negative electrode.

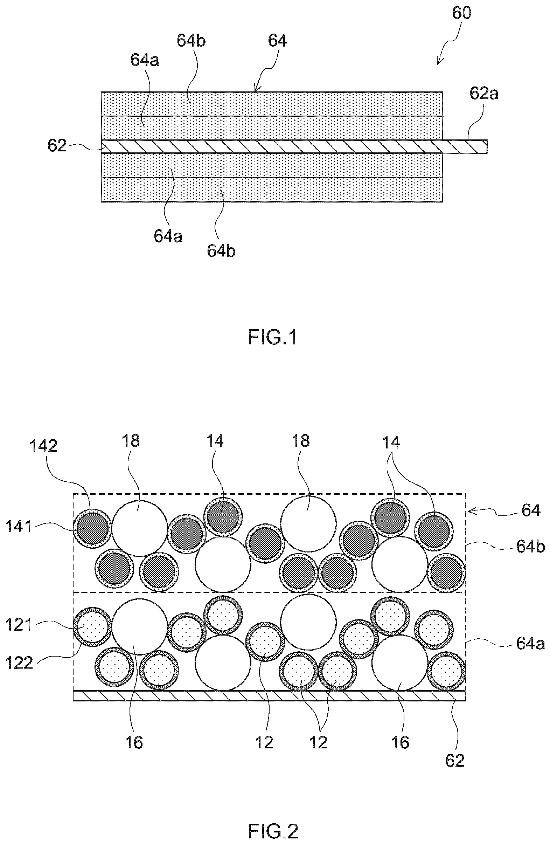

The herein disclosed negative electrode is used for a secondary battery, or suitably used for a lithium ion secondary battery. One embodiment of the herein disclosed negative electrode would be particularly explained, while referring to FIG. 1. FIG. 1 is a cross section view that schematically shows an example of a negative electrode 60 in accordance with the present embodiment, and is a cross section view that is shown along a thickness direction and a width direction. The negative electrode 60 in accordance with the present embodiment shown by FIG. 1 is the negative electrode of the lithium ion secondary battery.

As shown in the drawing, the negative electrode 60 includes a negative electrode current collector 62 and a negative electrode active material layer 64 that is supported by the negative electrode current collector 62. In other words, the negative electrode 60 includes the negative electrode current collector 62 and the negative electrode active material layer 64 that is provided on the negative electrode current collector 62. The negative electrode active material layer 64 might be provided on only one surface of the negative electrode current collector 62 or might be provided on both surfaces of the negative electrode current collector 62 as shown by the illustrated example. It is preferable that the negative electrode active material layer 64 is provided on both surfaces of the negative electrode current collector 62.

As shown in the illustrated example, a negative electrode active material layer non-formation part 62a in which the negative electrode active material layer 64 is not provided might be provided at one of end parts in the width direction of the negative electrode 60. On the negative electrode active material layer non-formation part 62a, the negative electrode current collector 62 is exposed and thus the negative electrode active material layer non-formation part 62a can function as an electrical collector part. However, a configuration for electrically collecting from the negative electrode 60 is not restricted by this.

A shape of the negative electrode current collector 62 is a foil shape (or a sheet shape) in the illustrated example, but it is not restricted by this. The negative electrode current collector 62 might be formed in a rod shape, a plate shape, a mesh shape, or the like. As a material of the negative electrode current collector 62, similarly to a conventional lithium ion secondary battery, it is possible to use a metal having a good electrically conductive property (for example, copper, nickel, titanium, stainless steel, or the like), and the copper is preferable among them. As the negative electrode current collector 62, it is especially preferable to use a copper foil.

A size of the negative electrode current collector 62 is not particularly restricted, and it is good to be suitably decided in accordance with a battery design. In a situation where the copper foil is used as the negative electrode current collector 62, a thickness of it is not particularly restricted, but it might be, for example, equal to or more than 5 µm and not more than 35 µm, or preferably equal to or more than 6 µm and not more than 20 µm.

Anyway, when the electrical charge and the electrical discharge are repeated on the secondary battery, in the negative electrode active material layer that includes the negative electrode active material containing Si, an expansion and contraction of the negative electrode active material are repeated. The repeat of the expansion and contraction described above can be a factor of causing the swell on the negative electrode active material layer. If the negative electrode active material layer swells, a thickness of the negative electrode is increased, which becomes, for example, a factor of causing a reduction in a battery performance, and thus, it is not preferable. Regarding the negative electrode active material layer, as a negative electrode current collector side and a surface layer side (a side opposite to the negative electrode current collector) are compared, a stronger swell tendency is observed at the surface layer side when the electrical charge and the electrical discharge are repeated on the secondary battery. Then, the present inventor has thought that, by making the negative electrode active material layer have a multilayer structure and by arranging the negative electrode active material layer at the surface layer of the negative electrode active material layer, the negative electrode active material layer containing a negative electrode active material whose Si content rate is relatively smaller, it is possible to suppress the swell of the negative electrode when the electrical charge and the electrical discharge are repeated on the secondary battery.

Regarding the negative electrode active material containing Si, for example, a volume change in response to the electrical charge and the electrical discharge of the secondary battery is large. Thus, by an expansion caused at the time when the secondary battery is electrically charged, there is a possibility that SEI coating layer being present on the surface of the negative electrode active material is damaged. When the SEI coating layer is damaged, the surface of the negative electrode active material is exposed, the nonaqueous electrolytic solution at this exposed part is decomposed, and further, the SEI coating layer is formed. When the electrical charge and the electrical discharge are repeated on the secondary battery, damaging this SEI coating layer and forming the SEI coating layer at this damaged portion (an exposed portion of the negative electrode active material) are repeatedly caused. By this, when the electrical charge and the electrical discharge are repeated, an ununiformity for a reaction, a stress, or the like, is caused on the negative electrode active material layer, which becomes a factor of causing the swell of the above described negative electrode. Thus, the present inventor has thought to provide a LiF coating layer on a surface of the negative electrode active material containing Si.

As shown in FIG. 1, the negative electrode active material layer 64 has the multilayer structure. The negative electrode active material layer 64 herein includes a first layer 64a and a second layer 64b. As shown in FIG. 1, the first layer 64a is positioned at the negative electrode current collector 62 side. The second layer 64b is positioned at the surface layer side (here, a side opposite to the negative electrode current collector 62). Incidentally, the negative electrode active material layer 64 might include layers other than the first layer 64a and the second layer 64b, within a range where an effect of the present disclosure is not significantly inhibited. For example, the negative electrode active material layer 64 might include a middle layer between the first layer 64a and the second layer 64b, as components of these layers are mixed in the middle layer.

The negative electrode active material layer 64 contains a negative electrode active material. About this, it is explained with FIG. 2. FIG. 2 is a schematic cross section view that shows a particle of a negative electrode active material contained in the negative electrode active material layer 64 shown by FIG. 1. Incidentally, FIG. 2 is a schematic view, and thus a number of the particles, a distribution of the particles, or the like, are not restricted to one shown by FIG. 2.

As shown in FIG. 2, the first layer 64a contains first Si-containing particles 12 as the negative electrode active material. The second layer 64b contains second Si-containing particles 14 as the negative electrode active material.

In this embodiment, a Si content rate (S2) of the second Si-containing particles 14 is smaller than a Si content rate (S1) of the first Si-containing particles 12. As long as the effects of the present disclosure can be realized, the Si content rate (S1) and the Si content rate (S2) are not particularly restricted. From a perspective of further properly implementing the effects of the present disclosure, the Si content rate (S2) with respect to the Si content rate (S1) is preferably 0.3 to 0.9, or further preferably 0.4 to 0.8.

From a perspective of implementing the lithium ion secondary battery 100 having the higher capacity, the Si content rate (S1) is approximately equal to or more than 30 mass%, for example, equal to or more than 35 mass%, preferably equal to or more than 40 mass%, further preferably equal to or more than 45 mass%, or furthermore preferably equal to or more than 55 mass%. In contrary, from a perspective of making the expansion and contraction of the first layer 64a be appropriate, the Si content rate (S1) is preferably equal to or less than 80 mass%, or further preferably equal to or less than 75 mass%. From a perspective of suppressing the expansion and contraction of the second layer 64b and suppressing the negative electrode 60 from swelling when the electrical charge and the electrical discharge are repeated, the Si content rate (S2) is approximately equal to or less than 70 mass%, for example, equal to or less than 65 mass%, preferably equal to or less than 60 mass%, further preferably equal to or less than 55 mass%, furthermore preferably equal to or less than 50 mass%, or preferably in particular equal to or less than 45 mass%. In contrary, from a perspective of implementing the lithium ion secondary battery 100 having the higher capacity, the Si content rate (S2) is preferably equal to or more than 20 mass%, or further preferably equal to or more than 25 mass%.

The mean particle diameter (D50) of the first Si-containing particles 12 and the mean particle diameter (D50) of the second Si-containing particles 14 are not particularly restricted, and are, for example, 0.5 µm to 25 µm, preferably 1 µm to 20 µm, or further preferably 2 µm to 15 µm. The mean particle diameter (D50) of the first Si-containing particles 12 and the mean particle diameter (D50) of the second Si-containing particles 14 might be the same or might be different from each other.

Incidentally, in the present description, the term "mean particle diameter (D50)" represents a median diameter (D50), and represents a particle diameter corresponding to cumulative frequency 50 volume% from a side of a fine particle, whose particle diameter is smaller, with respect to a particle size distribution on a volume basis according to a laser diffraction and scattering method. The mean particle diameter (D50) can be obtained with a commercially available particle size distribution measuring apparatus configured in a laser diffraction and scattering style, or the like.

As shown in FIG. 2, the first Si-containing particles 12 contained in the first layer 64a includes core particles 121 and a coating layer 122. The core particles 121 are, for example, Si-containing particles. The coating layer 122 herein is arranged on at least a part of a surface of the core particles 121. As shown in FIG. 2, the second Si-containing particles 14 contained in the second layer 64b includes core particles 141 and a coating layer 142. The core particles 141 are, for example, Si-containing particles. The coating layer 142 herein is arranged on at least a part of a surface of the core particles 141. It is enough that the Si-containing particles configuring the core particles 121 and the core particles 141 contain Si, and they might be, for example, Si particles, Si oxide particles, Si-C composite particles, or the like. It is good that both of the core particles 121 and the core particles 141 are the Si-C composite particles. The Si-C composite particles include, for example, a carbon domain and a Si-containing domain.

The carbon domain is, for example, a carbonide of a carbon precursor (for example, a petroleum pitch, a coal pitch, a phenolic resin, or the like); a graphite; or the like. The carbon domain suitably configures a carbon matrix. It is good that the Si-C composite particles are, for example, particles in which the Si-containing domain is dispersed into the carbon matrix. The Si-C composite particles can include, for example, plural Si-containing domains in the carbon matrix. In this case, the carbon matrix can relieve a volume change caused by an expansion and a contraction of the Si-containing domain, and thus it is advantageous.

The Si-containing domain contains the Si, and is configured with, for example, Si, a Si oxide (SiOₓ), a Si nitride (SiNₓ), a Si carbide (SiCₓ), or the like. The Si-containing domain is configured with preferably at least any of the Si and the Si oxide (SiOₓ). The Si-containing domain might be nanoparticles. An oxygen content amount of the Si-containing domain is preferably equal to or less than 10 mass%.

A mean particle diameter of the Si-containing domain is, for example, equal to or less than 50 nm, or might be 5 nm to 50 nm. Incidentally, said "mean particle diameter of the Si-containing domain" can be obtained as described below. At first, the negative electrode active material layer 64 is subjected to a FIB (a focused ion beam) processing, so as to manufacture a specimen for a scan transmission electron microscope (STEM) observation. Then, after this specimen is subjected to an element analysis by EDX elemental mapping, a BF image (a bright field image) and a HAADF image (a high angle annular dark field image) are obtained. From a contrast and a shape obtained with the BF image and the HAADF image, it is possible to obtain a diameter of the Si-containing domain. Diameters of arbitrary selected 10 or more Si-containing domains are obtained, and a mean value of them herein is treated as said "mean particle diameter of the Si-containing domain".

The Si-C composite particles include, for example, a carbon base material and Si contained at an inside of the carbon base material. The carbon base material is preferably, for example, including voids, or is furthermore preferably being a porous carbon base material. The Si contained at the inside of the carbon base material is, for example, to have a size capable of being contained at the inside of the carbon base material, or it is good to have a size capable of being contained in the voids when the carbon base material includes the voids. From a perspective described above, regarding the Si contained at the inside of the carbon base material, it is good to be Si-containing nanoparticles (for example, Si nanoparticles, Si oxide nanoparticles, Si nitride nanoparticles, Si carbide nanoparticles, or the like) whose mean particle diameter (here, a mean particle diameter of the Si-containing domain) is approximately 1 nm to 300 nm (preferably, 1 nm to 200 nm, or further preferably 1 nm to 100 nm). From a perspective of suppressing the volume change in Si and consequently relieving the volume changes in the first Si-containing particles 12 and the second Si-containing particles 14, it is preferable that the Si-C composite particles contain particles including the carbon base material having the voids (further preferably, a porous carbon base material) and including the Si arranged at the inside of the voids (for example, the Si-containing nanoparticles). Alternatively, regarding another embodiment, the Si-C composite particles might contain carbon particles and the Si-containing nanoparticles adhered to a surface of the carbon particles, or might contain particles containing the Si and contain the carbon nanoparticles adhered to a surface of the particles containing Si.

The coating layer 122 and the coating layer 142 herein contain LiFs. Presences of the coating layer 122 and the coating layer 142 can be, for example, confirmed by a measurement with X-ray photoelectron spectroscopy (XPS) on the first Si-containing particles 12 and the second Si-containing particles 14. A content rate of the LiF in the coating layer 122 (a concentration of the LiF) corresponds, on the XPS spectrum of the first Si-containing particles 12 measured with the XPS, to a ratio of a peak intensity of a F of the LiF with respect to a peak intensity of the F of one being other than the LiF. A content rate of the LiF in the coating layer 142 (the concentration of the LiF) corresponds, on the XPS spectrum of the second Si-containing particles 14 measured with the XPS, to the ratio of the peak intensity of the F of the LiF with respect to the peak intensity of the F of one being other than the LiF. Incidentally, on the XPS spectrum measured with the XPS, the peak of the F of the LiF appears at 683 eV to 686 eV. The peak of the F of one being other than the LiF is the peak of the F outside the range of being 683 eV to 686eV, and especially appears at 687 eV to 690 eV.

Here, on the XPS spectrum of the first Si-containing particles 12 measured with the XPS, the ratio of the peak intensity of the F of the LiF with respect to the peak intensity of the F of one being other than the LiF is treated as a first peak intensity ratio. On the XPS spectrum of the second Si-containing particles 14, the ratio of the peak intensity of the F of the LiF with respect to the peak intensity of the F of one being other than the LiF is treated as a second peak intensity ratio. Here, the second peak intensity ratio is smaller than the first peak intensity ratio. A difference between the first peak intensity ratio and the second peak intensity ratio is, for example, equal to or more than 0.050, preferably equal to or more than 0.075, further preferably equal to or more than 0.100, or furthermore preferably equal to or more than 0.125. In contrary, the difference between the first peak intensity ratio and the second peak intensity ratio is approximately equal to or less than 1.00, for example, equal to or less than 0.750, preferably equal to or less than 0.600, further preferably equal to or less than 0.500, or furthermore preferably equal to or less than 0.450.

It is good that the first peak intensity ratio is approximately 0.450 to 1.00. The first peak intensity ratio is, for example, equal to or more than 0.460, preferably equal to or more than 0.480, or further preferably equal to or more than 0.500. The first peak intensity ratio is, for example, equal to or less than 0.900, preferably equal to or less than 0.850, further preferably equal to or less than 0.800, or furthermore preferably equal to or less than 0.750. It is good that the second peak intensity ratio is approximately equal to or more than 0.200 and less than 0.450. The second peak intensity ratio is, for example, equal to or more than 0.250, preferably equal to or more than 0.275, or further preferably equal to or more than 0.300. The second peak intensity ratio is, for example, equal to or less than 0.420, preferably equal to or less than 0.400, or further preferably equal to or less than 0.380.

What the core particles 121 include the coating layer 122 and what the core particles 141 include the coating layer 142 can be confirmed, for example, by a SEM observation, too. A covering rate on the surface of the core particles 121 by the coating layer 122 is, for example, equal to or more than 20%, preferably equal to or more than 50%, further preferably equal to or more than 80%, or furthermore preferably equal to or more than 90%, and it is better as it is closer to 100%. A covering rate on the surface of the core particles 141 by the coating layer 142 is, for example, equal to or more than 20%, preferably equal to or more than 50%, further preferably equal to or more than 80%, or furthermore preferably equal to or more than 90%, and it is better as it is closer to 100%. Although not particularly restricting, a covering rate of the core particles 121 surface by the coating layer 122 regarding the first Si-containing particles 12 might be, for example, larger than the covering rate of the core particles 141 surface by the coating layer 142 regarding the second Si-containing particles 14. Incidentally, the covering rate by the coating layer 122 or by the coating layer 142 can be obtained as described below. A SEM observation image of a cross section of the first Si-containing particles 12 or the second Si-containing particles 14 is obtained. On this image, a rate (a percentage) of a total length of the coating layer 122 or the coating layer 142 with respect to a perimeter of the core particles 121 or the core particles 141 is calculated. For arbitrarily selected 5 or more first Si-containing particles 12 or second Si-containing particles 14, these rates are calculated and then a mean value of them is treated as the covering rate.

Incidentally, the first Si-containing particles 12 and the second Si-containing particles 14 can be manufactured by a well known method. Incidentally, various manufacturing methods of the particles of the Si-C composite material are well known (for example, see Japanese Patent Application Publication No. 2015-38862, International Patent Publication No. 2014/046144, prior art documents recited in these publications, or the like).

As shown in FIG. 2, the first layer 64a further contains first graphite particles 16 as the negative electrode active material. The second layer 64b further contains second graphite particles 18 as the negative electrode active material. It is good that each of the first graphite particles 16 and the second graphite particles 18 are graphite particles substantially not containing Si. Both of the Si content rate of the first graphite particles 16 and the Si content rate of the second graphite particles 18 are approximately equal to or less than 10 mass%, for example, equal to or less than 7 mass%, preferably equal to or less than 5 mass%, further preferably equal to or less than 3 mass%, or furthermore preferably equal to or less than 1 mass%, alternatively equal to or less than 0.5 mass%, and thus it is better as closer to 0 mass%. The Si content rate can be calculated, for example, by a conventionally known method, such as ICP analysis.

The graphite configuring the first graphite particles 16 and the second graphite particles 18 might be a natural graphite or an artificial graphite, or might be an amorphous carbon coated graphite having a form in which the graphite is coated with an amorphous carbon material.

The shapes of the first graphite particles 16 and the second graphite particles 18 are not particularly restricted, and might be scaly shapes, spheroidized shapes, or the like. The first graphite particles 16 and the second graphite particles 18 are preferably spheroidized graphite particles. In a situation where the first graphite particles 16 and the second graphite particles 18 are spheroidized, circularities of the first graphite particles 16 and the second graphite particles 18 are preferably 0.85 to 1, further preferably 0.88 to 1, or furthermore preferably 0.90 to 1.

Incidentally, the term "circularity" in the present description represents a ratio of a perimeter of a perfect circle whose area size is the same as a projected area size of a particle with respect to a perimeter of a particle projected image (in other words, the circularity = the perimeter of the perfect circle whose area size is the same as the projected area size / the perimeter of the particle projected image). Thus, as the circularity is closer to 1, it means that the particle projected image is closer to the perfect circle and the particle becomes closer to a perfect spherical shape. The circularity can be obtained, for example, by using a commercially available static automatic image analysis apparatus, obtaining the circularities of 100 or more particles, and calculating a mean value of them.

A mean particle diameter (D50) of the first graphite particles 16 and a mean particle diameter (D50) of the second graphite particles 18 are not particularly restricted. Each of the mean particle diameter (D50) of the first graphite particles 16 and the mean particle diameter (D50) of the second graphite particles 18 is, for example, 1 µm to 30 µm, preferably 5 µm to 25 µm, further preferably 10 µm to 23 µm, or furthermore preferably 12 µm to 20 µm.

As the first graphite particles 16 and the second graphite particles 18, the same graphite particles might be used or different graphite particles might be used. As the first graphite particles 16 and the second graphite particles 18, it is preferable to use the same graphite particles.

Regarding the first layer 64a, in a situation where the first graphite particles 16 are contained, when a sum of the first Si-containing particles 12 and the first graphite particles 16 is treated as 100 mass%, a rate of the first Si-containing particles 12 is, for example, 5 mass% to 60 mass%, preferably 10 mass% to 50 mass%, or further preferably 15 mass% to 40 mass%. Incidentally, the first graphite particles 16 is, for example, used for enhancing the electrically conductive property of the negative electrode active material layer 64, and thus a matter of containing it is not essential. In another embodiment, regarding the first layer 64a, the first graphite particles 16 might not be contained.

The negative electrode active material contained in the first layer 64a might be only the first Si-containing particles 12 and the first graphite particles 16, or might be only the first Si-containing particles 12. However, if an effect of a herein disclosed technique can be implemented, the first layer 64a might contain another negative electrode active material, which is different from any of the first Si-containing particles 12 and the first graphite particles 16. In this situation, a rate of said another negative electrode active materials is preferably equal to or less than 10 mass% of the total amount of the negative electrode active material contained in the first layer 64a.

Regarding the second layer 64b, in a situation where the second graphite particles 18 is contained, when a sum of the second Si-containing particles 14 and the second graphite particles 18 is treated as 100 mass%, a rate of the second Si-containing particles 14 is, for example, 10 mass% to 60 mass%, preferably 15 mass% to 50 mass%, or further preferably 20 mass% to 40 mass%. Incidentally, the second graphite particles 18 is, for example, used for enhancing the electrically conductive property of the negative electrode active material layer 64, and thus a matter of containing it is not essential. In another embodiment, regarding the second layer 64b, the second graphite particles 18 might not be contained.

The negative electrode active material contained in the second layer 64b might be only the second Si-containing particles 14 and the second graphite particles 18, or might be only the second Si-containing particles 14. However, if the effect of the herein disclosed technique can be implemented, the second layer 64b might contain another negative electrode active material, which is different from any of the second Si-containing particles 14 and the second graphite particles 18. In this situation, a rate of said another negative electrode active material is preferably equal to or less than 10 mass% of the total amount of the negative electrode active material contained in the second layer 64b.

In the negative electrode active material layer 64, a ratio (T_{A} : T_{B}) of a thickness (T_{A}) of the first layer 64a and a thickness (T_{B}) of the second layer 64b is approximately 5 : 95 to 95 : 5, for example, 10 : 90 to 90 : 10, preferably 20 : 80 to 80 : 20, further preferably 30 : 70 to 70 : 30, or furthermore preferably 40 : 60 to 60 : 40.

The negative electrode active material layer 64 might contain a component other than the negative electrode active material, and it is possible as an example of it to use a binder, an electrically conducting material, or the like. As the binder, for example, it is possible to use a styrene butadiene rubber (SBR), carboxymethyl cellulose (CMC), polyacrylic acid (PAA), polyvinylidene fluoride (PVDF), or the like. The CMC functions as a thickening agent, too. As an example of the electrically conducting material, it is possible to use a carbon black, such as acetylene black, a carbon fiber, a carbon nanotube (CNT), or the like. Among them, the CNT is preferable. In a situation where the CNT is used as the electrically conducting material, the negative electrode active material layer 64 might contain a dispersing agent for the CNT.

A content amount of the negative electrode active material in the first layer 64a (in other words, with respect to a total mass of the first layer 64a) is preferably equal to or more than 90 mass%, or further preferably equal to or more than 95 mass%. A content amount of the binder in the negative electrode active material layer is preferably equal to or more than 0.1 mass% and not more than 8 mass%, or further preferably equal to or more than 0.5 mass% and not more than 5 mass%. A content amount of the electrically conducting material in the negative electrode active material layer 64 is preferably equal to or more than 0.01 mass% and not more than 3 mass%, or further preferably equal to or more than 0.05 mass% and not more than 1 mass%.

A content amount of the negative electrode active material in the second layer 64b (in other words, with respect to a total mass of the second layer 64b) is preferably equal to or more than 90 mass%, or further preferably equal to or more than 95 mass%. A content amount of the binder in the negative electrode active material layer is preferably equal to or more than 0.1 mass% and not more than 8 mass%, or further preferably equal to or more than 0.5 mass% and not more than 5 mass%. A content amount of the electrically conducting material in the negative electrode active material layer 64 is preferably equal to or more than 0.01 mass% and not more than 3 mass%, or further preferably equal to or more than 0.05 mass% and not more than 1 mass%.

A thickness of the negative electrode active material layer 64 is, which is not particularly restricted, for example, equal to or more than 10 µm and not more than 400 µm, or preferably equal to or more than 20 µm and not more than 300 µm.

Although a density of the negative electrode active material layer 64 is not particularly restricted, it is, for example, equal to or more than 0.7 g/cm³ , preferably equal to or more than 1.0 g/cm³, or further preferably equal to or more than 1.2 g/cm³. On the other hand, the density of the negative electrode active material layer 64 might be, for example, equal to or less than 2.3 g/cm³, or might be equal to or less than 2.0 g/cm³.

The negative electrode 60 might include a member other than the negative electrode current collector 62 and the negative electrode active material layer 64. For example, on the negative electrode active material layer non-formation part 62a, an insulation layer (not shown in drawings) might be provided that is positioned adjacent to the negative electrode active material layer 64. This insulation layer includes, for example, an inorganic filler having an insulating property, or the like.

As described above, the negative electrode 60 for the secondary battery includes the negative electrode current collector 62 and the negative electrode active material layer 64. The negative electrode active material layer 64 is supported by the negative electrode current collector 62. The negative electrode active material layer 64 includes the first layer 64a positioned at the negative electrode current collector 62 side and the second layer 64b positioned at the surface layer side. The first layer 64a contains the first Si-containing particles 12 as the negative electrode active material. The second layer 64b contains the second Si-containing particles 14 as the negative electrode active material. The Si content rate (S2) of the second Si-containing particles 14 is smaller than the Si content rate (S1) of the first Si-containing particles 12.

The first Si-containing particles 12 include the LiF coating layer (here, the LiF coating layer contained in the coating layer 122). The second Si-containing particles 14 includes the LiF coating layer (here, the LiF coating layer contained in the coating layer 142). On the XPS spectrum of the first Si-containing particles 12 measured with the XPS, the ratio of the peak intensity of the F of the LiF with respect to the peak intensity of the F of one being other than the LiF is treated as the first peak intensity ratio. On the XPS spectrum of the second Si-containing particles 14, the ratio of the peak intensity of the F of the LiF with respect to the peak intensity of the F of one being other than the LiF is treated as the second peak intensity ratio. The second peak intensity ratio is smaller than the first peak intensity ratio. A difference between the first peak intensity ratio and the second peak intensity ratio is 0.050 to 1.00.

In the negative electrode 60, the first Si-containing particles 12 whose Si content rate is relatively larger and the second Si-containing particles 14 whose Si content rate is relatively smaller are contained. In the negative electrode 60, the negative electrode active material layer 64 includes the first layer 64a at the negative electrode current collector 62 side and the second layer 64b at the surface layer side. When the electrical charge and the electrical discharge are repeated, regarding the negative electrode active material layer 64, the swell at the surface layer side becomes relatively larger. Regarding the Si-containing particles, for example, as the Si content rate of the Si-containing particles is larger, a degree of the expansion and contraction at the electrical charge and discharge time becomes larger. In contrary, as the Si content rate of the Si-containing particles is smaller, the degree of the expansion and contraction at the electrical charge and discharge time becomes smaller. Thus, when the second Si-containing particles 14 whose Si content rate is relatively smaller is arranged on the second layer 64b at the surface layer, it is possible on the second layer 64b to make the particle become to further easily move. Thus, by a movement of the particles at the expansion and contraction time due to the electrical charge and discharge, it is possible to relieve the stress, and to suppress the swell on the negative electrode. Then, regarding the negative electrode 60, the first Si-containing particles 12 whose Si content rate is relatively larger is contained in the first layer 64a. By this, in the negative electrode 60, the degree of the expansion and contraction of the first layer 64a becomes larger. By this, it is possible to make a degree of the expansion and contraction of the whole negative electrode active material layer 64 at the electrical charge and discharge time be further uniform. Thus, it is possible to suppress the situation where the reaction, the stress, or the like is locally concentrated on the negative electrode active material layer 64, and therefore it is possible to suppress the swell of the negative electrode 60 when the electrical charge and the electrical discharge are repeated.

In addition to this, each of the first Si-containing particles 12 and the second Si-containing particles 14 include the LiF coating layer on the surface. The LiF coating layer can follow the expansion and contraction of the Si-containing particles, and thus it is possible to suppress the particle surface from being exposed due to the expansion and contraction. Here, the second peak intensity ratio of the second Si-containing particles 14 is smaller than the first peak intensity ratio of the first Si-containing particles 12. A difference between the first peak intensity ratio and the second peak intensity ratio is adjusted to satisfy 0.050 to 1.00. In other words, according to the Si content rate, on each of the first Si-containing particles 12 and the second Si-containing particles 14, the LiF coating layer is provided. By this, on each Si-containing particle, the exposure of the particle surface due to the above described expansion and contraction can be suppressed, and thus it is possible to suppress a reaction, a stress, or the like, from being concentrated locally on the negative electrode active material layer 64. Therefore, it is possible to suppress the swell of the negative electrode 60 when the electrical charge and the electrical discharge are repeated.

The Si content rate (S2) of the second Si-containing particles 14 with respect to the Si content rate (S1) of the first Si-containing particles 12 might be 0.3 to 0.9. By setting the Si content rate (S1) and the Si content rate (S2) within a range described above, it is possible to make the degree of the expansion and contraction of the first layer 64a at the electrical charge and discharge time and the degree of the expansion and contraction of the second layer 64b at the electrical charge and discharge time be suitable. By this, it is possible to further suitably suppress the swell of the negative electrode 60 when the electrical charge and the electrical discharge are repeated.

The Si content rate (S1) of the first Si-containing particles 12 might be 30 mass% to 80 mass%. The Si content rate (S2) of the second Si-containing particles 14 might be 20 mass% to 70 mass%. By this, while suppressing the swell of the negative electrode 60 when the electrical charge and the electrical discharge are repeated, it is possible to implement making the secondary battery 100 have a higher capacity.

The first peak intensity ratio might be 0.450 to 1.00. By this, when the electrical charge and the electrical discharge are repeated, it is possible to suitably suppress an exposed portion from being caused on the surface of the first Si-containing particles 12. Further, by making the LiF coating layer become thicker, it is possible to suppress a resistance of the negative electrode 60 from becoming too larger. Furthermore, by a side reaction on the LiF coating layer, it is possible to suppress the Si-containing particles from becoming easily expanded.

The second peak intensity ratio might be equal to or more than 0.200 and less than 0.450. By this, it is possible, when the electrical charge and the electrical discharge are repeated, to suitably suppress the exposed portion from being caused on the surface of the second Si-containing particles 14.

The first Si-containing particles 12 might contain the Si-C composite particles (here, the core particles 121) including the carbon base material and the Si contained at the inside of the carbon base material, and contain the LiF coating layer (here, the LiF coating layer contained in the coating layer 122) arranged on at least a part of the surface of the Si-C composite particles (here, the core particles 121). The second Si-containing particles 14 might contain the Si-C composite particles (here, the core particles 141) including the carbon base material and the Si contained at the inside of the carbon base material, and contain the LiF coating layer (here, the LiF coating layer contained in the coating layer 142) arranged on at least a part of the surface of this Si-C composite particles (here, the core particles 141). By this, it is possible to relieve the expansion of the Si in the carbon base material, and thus it is possible to suppress the expansions of the first Si-containing particles 12 and the second Si-containing particles 14. Thus, it is possible, when the electrical charge and the electrical discharge are repeated, to suppress the swell of the negative electrode 60.

The first layer 64a, further, might contain first graphite particles 16, as the negative electrode active material, which substantially does not contain the Si. The second layer 64b, further, might contain second graphite particles 18, as the negative electrode active material, which substantially does not contain the Si. By this, on the first layer 64a and the second layer 64b, it is possible to enhance an electrically conductive property.

The negative electrode 60 is manufactured by a manufacturing method that includes, for example, a first preparing step, a second preparing step, a first coating application step, a first drying step, a second coating application step, a second drying step, and a pressing step.

The first preparing step is, for example, a step for preparing a first paste that contains the first Si-containing particles 12 as the negative electrode active material and contains the dispersion medium. The first preparing step can be performed, according to a well known method, by mixing the first Si-containing particles 12, the first graphite particles 16 as needed, and an arbitrary component (for example, a binder, an electrically conducting material, or the like) with a well known mixing device, stirring device, or the like, with the dispersion medium (for example, water). Incidentally, in the present description, the term "paste" represents a mixture in which a part or all of solid contents are dispersed into a dispersion medium, and semantically covers so-called "slurry", "ink", or the like.

The first preparing step contains, for example, a matter of preparing the first Si-containing particles 12. At the preparing for the first Si-containing particles 12, for example, firstly, Si-containing particles as the core particles 121 are prepared. The Si-containing particles as the core particles 121 are, for example, Si-C composite particles. It is possible to prepare the Si-C composite particles, for example, with a well known method as described above.

Next, in a state where the obtained core particles 121 is dispersed into the water-soluble organic solvent, a water-soluble lithium salt and a fluorinated agent are made to react with the core particles 121 so as to generate the LiF. The LiF generated here becomes the coating layer 122 on the surface of the core particles 121.

As the water-soluble organic solvent agent, it is possible to use, for example, alcohols, such as ethanol (ethyl alcohol), or the like. As the water-soluble lithium salt, it is possible, for example, to use lithium acetate (dihydrate), lithium carbonate, lithium nitrate, lithium chloride, lithium hydroxide, or the like, and it is preferable to use the lithium acetate (dihydrate). As the fluorinated agent, it is possible to use hydrofluoric acid, ammonium fluoride, ammonium hydrogen fluoride, or the like, and it is preferable to use the ammonium fluoride.

In order to perform this operation, for example, at first, a solution of the water-soluble lithium salt, a dispersion liquid in which the core particles 121 is dispersed into the water or the water-soluble organic solvent, and a solution of the fluorinated agent are prepared. The solution of the water-soluble lithium salt and this dispersion liquid are mixed so as to manufacture a mixed solution. Under stirring, a solution of the fluorinated agent is added to this mixed solution. By this, the water-soluble lithium salt and the fluorinated agent are reacted so as to generate the LiF. By this, a reaction solution containing the LiF is obtained. In this reaction solution, it is possible to make a surface of the core particles 121 and the LiF come into contact with each other.

A reaction condition of the water-soluble lithium salt and the fluorinated agent might be similar to a well known synthesis condition of the LiF in which the water-soluble lithium salt and the fluorinated agent are used. For example, this reaction can be performed under a room temperature (in other words, 25°C ± 10°C) or might be performed under a heating condition. A reaction time might be suitably decided in accordance with concentrations of the water-soluble lithium salt and the fluorinated agent in the reaction solution, a desired content rate of the LiF in the coating layer 122, or the like. As the reaction time is longer, the content rate of the LiF in the coating layer 122 becomes higher.

By recovering the core particles 121 from the reaction solution under a state where the reaction solution, in which the LiF was generated, is adhered to the surface and then by drying the core particles 121 on which the reaction solution, in which the LiF was generated, is adhered, it is possible to make the LiF adhere to the surface of the core particles 121, and it is possible to obtain the first Si-containing particles 12, which includes the coating layer 122 containing the LiF. In order to adjust an amount of the LiF, the reaction solution in which the LiF is generated might be diluted with a water, or the like.

The second preparing step is, for example, a step for preparing a second paste that contains the second Si-containing particles 14 as the negative electrode active material and contains the dispersion medium. The second preparing step can be performed, according to a well known method, by mixing the second Si-containing particles 14, the second graphite particles 18 as needed, and an arbitrary component (for example, the binder, the electrically conducting material, or the like) with a well known mixing device, stirring device, or the like, with the dispersion medium (for example, water).

The second preparing step contains, for example, a matter of preparing the second Si-containing particles 14. Preparing the second Si-containing particles 14 can be performed by using the Si-C composite particles as the core particles 141, and further by using another material and procedure when the first Si-containing particles 12 is prepared while the condition is suitably changed.

The first coating application step is, for example, a step for applying the first paste to coat the negative electrode current collector 62. The first coating application step can be performed on the basis of a well known method. For example, by applying the obtained first paste to coat the negative electrode current collector 62 with a coating application device, such as gravure coater, comma coater, slit coater, and die coater, it is possible to perform the first coating application step.

The first drying step is, for example, a step for drying the first paste applied to coat the negative electrode current collector 62 and thus forming a dry layer of the first paste. The first drying step can be performed on the basis of a well known method. For example, by removing the dispersion medium with a drying device, such as drying furnace, from the negative electrode current collector 62 on which the first paste is applied to coat, the dry layer of the first paste is formed. By this, it is possible to perform the first drying step. A drying temperature and a drying time can be suitably decided in accordance with a solid content concentration of the first paste, and thus are not particularly restricted. The drying temperature is, for example, equal to or more than 60°C and not more than 200°C, or preferably equal to or more than 70°C and not more than 150°C. The drying time is, for example, equal to or more than 10 seconds and not more than 30 minutes, or preferably equal to or more than 30 seconds and not more than 10 minutes.

The second coating application step is, for example, a step for applying the second paste to coat the dry layer of the first paste. The second coating application step can be performed on the basis of a well known method. For example, by applying the obtained second paste with the above described device to coat the dry layer of the first paste, it is possible to perform the second coating application step.

The second drying step is, for example, a step for drying the second paste applied to coat the dry layer of the first paste and thus forming the dry layer of the second paste. The second drying step can be performed on the basis of a well known method. The device and several conditions for drying, which are used at the second drying step, are similar to the explanation described for the first drying step.

The pressing step is, for example, a step for pressing the dry layer of the first paste and the dry layer of the second paste. The pressing step can be performed on the basis of a well known method. For example, by applying a pressure with a roller press, or the like, on the dry layer of the first paste and the dry layer of the second paste, it is possible to perform the pressing step. By performing the pressing step, it is possible to tightly pack the first Si-containing particles 12, the second Si-containing particles 14, and the first graphite particles 16 and second graphite particles 18 as needed. As described above, it is possible to obtain the negative electrode 60 that includes the negative electrode active material layer 64 including the first layer 64a and the second layer 64b.

By the negative electrode 60 in accordance with the present embodiment, it is possible to suppress the swell of the negative electrode 60 when the electrical charge and the electrical discharge are repeated on the secondary battery. The negative electrode 60 in accordance with the present embodiment uses the negative electrode active material containing the Si, and thus it is possible to make the secondary battery have the higher capacity.

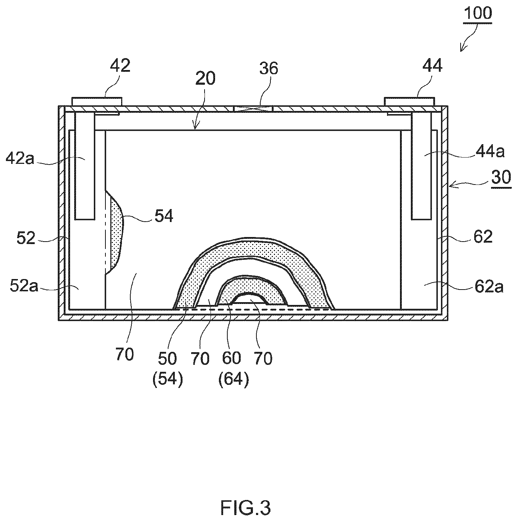

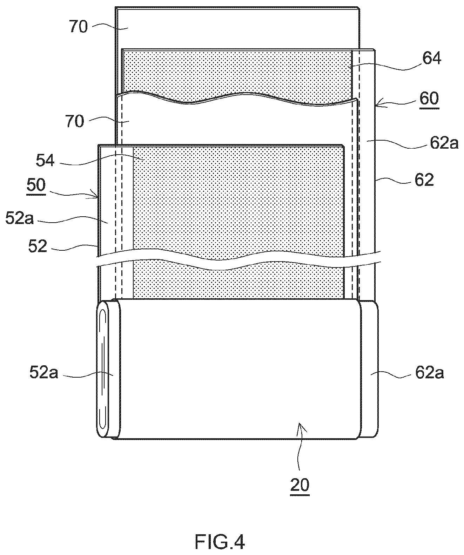

Then, from a different aspect, the herein disclosed secondary battery includes the positive electrode, the negative electrode, and the electrolyte. This negative electrode is the negative electrode 60 in accordance with the above described embodiment. Below, as the lithium ion secondary battery is treated as an example, one embodiment of the herein disclosed secondary battery would be explained while referring to FIG. 3 and FIG. 4. A below described configuration example is a lithium ion secondary battery that is formed in a flat square shape and that includes a wound electrode assembly formed in a flat shape and includes a battery case formed in a flat shape.

The lithium ion secondary battery 100 shown in FIG. 3 is the sealed type lithium ion secondary battery 100 constructed by accommodating the flat-shaped wound electrode assembly 20 and the nonaqueous electrolytic solution (not shown in drawings) in the battery case (in other words, the outer container) 30 formed in a flat square shape. The battery case 30 is provided with a positive electrode terminal 42 and a negative electrode terminal 44 which are for outside connection, and provided with a thin-walled safe valve 36 which is set to release an internal pressure of the battery case 30 when the internal pressure is increased to be equal to or more than a predetermined level. The battery case 30 is provided with an injection port (not shown in drawings) for injecting the nonaqueous electrolytic solution. The positive electrode terminal 42 is electrically connected to a positive electrode current collection plate 42a. The negative electrode terminal 44 is electrically connected to the negative electrode current collection plate 44a. As a material of the battery case 30, for example, it is possible to use a metal material, such as aluminum, being lightweight and having a good thermal conductivity.

The wound electrode assembly 20 has a form, as shown by FIG. 3 and FIG. 4, in which a positive electrode sheet 50 and a negative electrode sheet 60 are stacked one on another via 2 long separator sheets 70 and then wound in a longitudinal direction. The positive electrode sheet 50 has a configuration in which a positive electrode active material layer 54 is formed on one surface or both surfaces (here, both surfaces) of a long positive electrode current collector 52 along the longitudinal direction. The negative electrode sheet 60 has a configuration in which the negative electrode active material layer 64 is formed on one surface or both surfaces (here, both surfaces) of the long negative electrode current collector 62 along the longitudinal direction. A positive electrode active material layer non-formation part 52a (in other words, a portion where the positive electrode active material layer 54 is not formed and the positive electrode current collector 52 is exposed) and the negative electrode active material layer non-formation part 62a (in other words, a portion where the negative electrode active material layer 64 is not formed and the negative electrode current collector 62 is exposed) are formed to protrude outwardly from both ends of the wound electrode assembly 20 in the winding axis direction (in other words, a sheet width direction orthogonal to the longitudinal direction). To the positive electrode active material layer non-formation part 52a and the negative electrode active material layer non-formation part 62a, the positive electrode current collection plate 42a and the negative electrode current collection plate 44a are respectively joined.

As the positive electrode current collector 52 configuring the positive electrode sheet 50, it is possible to use a well known positive electrode current collector that is used for the lithium ion secondary battery, and it is possible as an example of it to use a sheet or a foil which is made from a metal having the good electrically conductive property (for example, aluminum, nickel, titanium, stainless steel, or the like). As the positive electrode current collector 52, it is preferable to use the aluminum foil.

A size of the positive electrode current collector 52 is not particularly restricted, and can be decided suitably according to a battery design. In a situation where the aluminum foil is used as the positive electrode current collector 52, a thickness of it is not particularly restricted, but is, for example, equal to or more than 5 µm and not more than 35 µm, or preferably equal to or more than 7 µm and not more than 20 µm.

The positive electrode active material layer 54 contains a positive electrode active material. As the positive electrode active material, it is possible to use a positive electrode active material which is used for the lithium ion secondary battery and whose composition is well known. In particular, for example, it is possible as the positive electrode active material to use a lithium composite oxide, a lithium transition metal phosphate compound, or the like. A crystal structure of the positive electrode active material is not particularly restricted, but might be a layered structure, a spinel structure, an olivine structure, or the like.

Regarding the lithium composite oxide, it is preferable as a transition metal element to use a lithium transition metal complex oxide containing at least 1 kind among Ni, Co, and Mn, and it is possible as a specific example of it to use a lithium nickel base composite oxide, a lithium cobalt base composite oxide, a lithium manganese base composite oxide, a lithium nickel manganese base composite oxide, a lithium nickel cobalt manganese base composite oxide, a lithium nickel cobalt aluminum base composite oxide, a lithium iron nickel manganese base composite oxide, or the like.

Incidentally, the term "lithium nickel cobalt manganese base composite oxide" in the present description is a term semantically covering not only the oxide whose constituent element is Li, Ni, Co, Mn, or O, but also an oxide containing 1 kind, 2 kinds, or more kinds of additive elements other than them. As an example of the additive element described above, it is possible to use a transition metal element, such as Mg, Ca, Al, Ti, V, Cr, Y, Zr, Nb, Mo, Hf, Ta, W, Na, Fe, Zn, and Sn, a typical metal element, or the like. The additive element might be a semimetal element, such as B, C, Si, and P, or a non-metal element, such as S, F, Cl, Br, and I. This matter is similar even on the above described lithium nickel base composite oxide, lithium cobalt base composite oxide, lithium manganese base composite oxide, lithium nickel manganese base composite oxide, lithium nickel cobalt aluminum base composite oxide, lithium iron nickel manganese base composite oxide, or the like.

As the lithium transition metal phosphate compound, it is possible to use, for example, lithium iron phosphate (LiFePO₄), lithium manganese phosphate (LiMnPO₄), lithium manganese iron phosphate, or the like.

Regarding these positive electrode active materials, 1 kind might be used alone, or 2 or more kinds might be combined so as to be used. As the positive electrode active material, the lithium nickel cobalt manganese base composite oxide is especially preferable because it has superior characteristics, such as initial resistance characteristic.

The mean particle diameter (D50) of the positive electrode active material is not particularly restricted, but is, for example, equal to or more than 0.05 µm and not more than 25 µm, preferably equal to or more than 1 µm and not more than 20 µm, or further preferably equal to or more than 3 µm and not more than 15 µm.

The positive electrode active material layer 54 might contain a component other than the positive electrode active material, such as trilithium phosphate, electrically conducting material, and binder. As the electrically conducting material, it is possible to suitably use, for example, a carbon black, such as acetylene black (AB); a carbon fiber, such as vapor grown carbon fiber (VGCF) and carbon nanotube (CNT); or another carbon material (for example, a graphite, or the like). As the binder, it is possible to use, for example, polyvinylidene fluoride (PVdF), or the like.

A content amount of the positive electrode active material in the positive electrode active material layer 54 (in other words, a content amount of the positive electrode active material with respect to a total mass of the positive electrode active material layer 54) is not particularly restricted, but preferably equal to or more than 70 mass%, further preferably equal to or more than 80 mass%, or furthermore preferably equal to or more than 85 mass% and not more than 99 mass%. The content amount of the trilithium phosphate in the positive electrode active material layer 54 is not particularly restricted, but is preferably equal to or more than 0.1 mass% and not more than 15 mass%, or further preferably equal to or more than 0.2 mass% and not more than 10 mass%. The content amount of the electrically conducting material in the positive electrode active material layer 54 is not particularly restricted, but preferably equal to or more than 0.1 mass% and not more than 20 mass%, or further preferably equal to or more than 0.3 mass% and not more than 15 mass%. A content amount of the binder in the positive electrode active material layer 54 is not particularly restricted, but preferably equal to or more than 0.4 mass% and not more than 15 mass%, or further preferably equal to or more than 0.5 mass% and not more than 10 mass%.

A thickness per one surface of the positive electrode active material layer 54 is not particularly restricted, but is normally equal to or more than 10 µm, or preferably equal to or more than 20 µm. On the other hand, this thickness is normally equal to or less than 400 µm, or preferably equal to or less than 300 µm.

As the negative electrode sheet 60, the above described negative electrode 60 is used.

As the separator 70, it is possible to use, for example, a porous sheet (film) configured with a resin, such as polyethylene (PE), polypropylene (PP), polyester, cellulose, and polyamide. The porous sheet described above might have a single layer structure, or might have two or more layers laminate structure (for example, a three layers structure in which PP layers are laminated on both surfaces of a PE layer). On a surface of the separator 70, a heat resistance layer (HRL) might be provided.

A thickness of the separator 70 is not particularly restricted, but is, for example, equal to or more than 5 µm and not more than 50 µm, or preferably equal to or more than 10 µm and not more than 30 µm. An air permeability of the separator 70 obtained by Gurley test is not particularly restricted, but is preferably equal to or less than 350 second/100cc.

The nonaqueous electrolytic solution contains, typically, a nonaqueous solvent and a supporting salt (an electrolyte salt). As the nonaqueous solvent, it is possible without particular restriction to use an organic solvent, such as carbonates, ethers, esters, nitriles, sulfones, and lactones, which can be used for the electrolytic solution of a general lithium ion secondary battery. Among them, the carbonates are preferable, and it is possible as a specific example of them to use ethylene carbonate (EC), propylene carbonate (PC), diethyl carbonate (DEC), dimethyl carbonate (DMC), ethyl methyl carbonate (EMC), monofluoroethylene carbonate (FEC), difluoroethylene carbonate (DFEC), monofluoromethyl difluoromethyl carbonate (F-DMC), trifluoro dimethyl carbonate (TFDMC), or the like. Regarding the nonaqueous solvents as described above, it is possible to use 1 kind alone or to combine 2 or more kinds so as to use the resultant. As one example, the nonaqueous solvent consists of only the carbonates. As another example, the nonaqueous solvent contains the carbonates and the esters, such as methyl acetate.

As the supporting salt, it is possible to suitably use, for example, a lithium salt, such as LiPF₆, LiBF₄, and lithium bis(fluorosulfonyl)imide (LiFSI) (preferably, the LiPF₆). A concentration of the supporting salt is preferably equal to or more than 0.7 mol/L and not more than 1.3 mol/L.

Incidentally, the above described nonaqueous electrolytic solution might contain a component other than the above described components, insofar as the effect of the present disclosure is not significantly spoiled, and thus might contains, for example, various additive agents which might be a coating layer forming agent, such as vinylene carbonate (VC) and oxalate complex; a gas generating agent, such as biphenyl (BP) and cyclohexylbenzene (CHB); a thickening agent; or the like.

The lithium ion secondary battery 100 can be used for various purposes. As a suitable usage, it is possible to apply it for a driving power supply mounted on a vehicle, such as battery electric vehicle (BEV), hybrid electric vehicle (HEV), and plug-in hybrid electric vehicle (PHEV). The lithium ion secondary battery 100 can be used as a storage battery, such as small electric power storage device. The lithium ion secondary battery 100 can be used, typically, in a form of a battery pack in which plural ones are connected in series and/or in parallel.

Above, as one example, the square-shaped lithium ion secondary battery 100 including the flat-shaped wound electrode assembly 20 has been explained. However, the lithium ion secondary battery can be configured to be a lithium ion secondary battery including a laminate type electrode assembly (in other words, an electrode assembly in which plural positive electrodes and plural negative electrodes are alternately laminated), too. The lithium ion secondary battery can be configured to be a cylindrical-shaped lithium ion secondary battery, a laminate case type lithium ion secondary battery, or the like, too.

According to a well known method, the lithium ion secondary battery 100 can be configured to be an all-solid state lithium ion secondary battery in which a solid electrolyte is used instead of the nonaqueous electrolyte, too.

The negative electrode 60 in accordance with the present embodiment is suitable for the negative electrode of the lithium ion secondary battery, but can be constructed for the negative electrode of the other secondary battery so as to be used, and the other secondary battery can be configured according to a well known method.

Below, a practical example relating to the present disclosure would be described in detail, which is not intended to restrict the present disclosure into this practical example. Incidentally, if there is no particular explanation, a wording "%" related to the content amount (the content rate) is based on a mass basis.

### <Manufacture of Si-C composite particle with coating layer containing LiF>

The Si-C composite particles (A) to (H) as the core particles were prepared. Each of the Si-C composite particles (A) to (H) prepared here were particles that included a porous carbon base material and Si nanoparticles arranged at an inside of a void of this carbon base material. The Si-C composite particles (A) were particles in which the Si content rate of the Si-C composite particles was 60%. The Si-C composite particles (B) were particles in which the Si content rate of the Si-C composite particles was 40%. The Si-C composite particles (C) were particles in which the Si content rate of the Si-C composite particles was 55%. The Si-C composite particles (D) were particles in which the Si content rate of the Si-C composite particles was 45%. The Si-C composite particles (E) were particles in which the Si content rate of the Si-C composite particles was 70%. The Si-C composite particles (F) were particles in which the Si content rate of this Si-C composite particles was 30%. The Si-C composite particles (G) were particles in which the Si content rate of the Si-C composite particles was 80%. The Si-C composite particles (H) were particles in which the Si content rate of the Si-C composite particles was 20%.

### [Practical example 1]

As the negative electrode active material, the first particles and the second particles were prepared. For preparing the first particles, the Si-C composite particles (A) were prepared as the core particles. While the core particles were subjected to an ultrasonic processing for 30 minutes, it was dispersed into the ethyl alcohol. The lithium acetate was dissolved into deionized water, so that the lithium acetate solution was prepared. Into this solution, the dispersion liquid of the Si-C composite particles was added while being stirred for 30 minutes. Into it, the ammonium fluoride solution was added while being stirred for 120 minutes, so as to make the lithium acetate and the ammonium fluoride react. By this, the reaction solution containing the LiF was obtained. The reaction solution was diluted, and then it was filtrated. A filtration residue was dried, so that a coating layer containing the LiF was provided on the Si-C composite particles (A). The procedure for preparing the second particles were the same as the procedure for preparing the first particles, other than using the Si-C composite particles (B) as the core particles and making the adding time of the ammonium fluoride solution (in other words, a reaction time) be 60 minutes.

As the XPS spectrum on the obtained first particles and second particles was measured, a peak of the F of the Li-F (about 684.8 eV) and a peak of the Li of the Li-F (about 55.1 eV) were observed, and thus it was confirmed that the LiF was contained. For the first particles, the ratio of the peak intensity of the F of the LiF with respect to the peak intensity of the F of one being other than the LiF (below, which might be referred to as "first LiF intensity ratio", too) was obtained. For the second particles, the ratio of the peak intensity of the F of the LiF with respect to the peak intensity of the F of one being other than the LiF (below, which might be referred to as "second LiF intensity ratio", too) was obtained. The result is shown in an applicable column of Table 1. Incidentally, the peak of the F of the LiF appeared at 683 eV to 686 eV, and a peak of the F of one being other than the LiF appeared at 687 eV to 690 eV.

Further, as the negative electrode active material, the graphite particles whose mean particle diameter (D50) was 15 µm was prepared. The graphite particles described above was the graphite particles that substantially did not contain the Si. The dispersion liquid of the single-walled carbon nanotube (SWCNT) being as the electrically conducting material was prepared. As the binder, the carboxymethyl cellulose (CMC), the polyacrylic acid (PAA), and the styrene butadiene rubber (SBR) were prepared.

The above described materials were kneaded with a water being as a solvent to make a mass ratio satisfy graphite particles / first particles / SWCNT / CMC / PAA / SBR = 80 / 20 / 0.1 / 1 / 1 /1.5, so as to manufacture the first paste with a below described procedure. The above described materials were kneaded with the water being as the solvent to make a mass ratio satisfy graphite particles / second particles / SWCNT / CMC / PAA / SBR = 70 / 30 / 0.1 / 1 / 1 / 1.5, so as to manufacture the second paste with the below described procedure.

The first particles, the SWCNT dispersion liquid, and the dispersion medium were kneaded with a disper by a rotation number being 3000 rpm. The graphite particles, the CMC, and the PAA are dry-mixed with a stirring granulator. A dry mixture obtained here and a kneaded material containing the first particles were subjected to thick-kneading. A solid content rate at that time was 65%. Next, by adding the SBR and an additional dispersion medium to the kneaded material obtained after the thick kneading and then by being subjected to dilute-mixing, the first paste was obtained.

The second particles, the SWCNT dispersion liquid, and the dispersion medium were kneaded with the disper by the rotation number being 3000 rpm. The graphite particles, the CMC, and the PAA are dry-mixed with a stirring granulator. A dry mixture obtained here and a kneaded material containing the second particles were subjected to the thick kneading. A solid content rate at that time was 65%. Next, by adding the SBR and an additional dispersion medium to the kneaded material obtained after the thick kneading and then by being subjected to dilute-mixing, the second paste was obtained.

The first paste was applied to coat the surface of the copper foil whose thickness was 10 µm, and then the resultant was dried, so that the dry layer of the first paste was formed. Next, the second paste was applied to coat the dry layer of the first paste, and then the resultant was dried, so that the dry layer of the second paste was formed. Here, an application amount of the second paste was set to make a thickness of the dry layer of the second paste become 50 when a thickness of the negative electrode active material layer (here, a sum thickness of the dry layer of the first paste and the dry layer of the second paste) was treated as 100. Then, after the negative electrode active material layer was roll-pressed, the obtained sheet was processed to have a predetermined dimension so that the negative electrode sheet was obtained.

### [Practical example 2]

For preparing the first particles, the Si-C composite particles (C) were used as the core particles, and the adding time of the ammonium fluoride solution was set to be 90 minutes. For preparing the second particles, the Si-C composite particles (D) were used as the core particles. Other than those, a material and procedure similar to Practical example 1 were used, so that the negative electrode sheet of the present example was obtained.

### [Practical example 3]

For preparing the first particles, the Si-C composite particles (E) were used as the core particles and the adding time of the ammonium fluoride solution was set to be 150 minutes. For preparing the second particles, the Si-C composite particles (F) were used as the core particles. Other than those, a material and procedure similar to Practical example 1 were used, so that the negative electrode sheet of the present example was obtained.

### [Comparative example 1]

To make the mass ratio satisfy graphite particle / first particles / second particles / SWCNT / CMC / PAA / SBR = 70 / 10 / 15 / 0.1 / 1 / 1 / 1.5, it was kneaded with the water being as the solvent, so that the negative electrode paste was manufactured. The negative electrode paste was manufactured by performing a first step and a second step which are described below. At the first step, firstly, the first particles, the second particles, a paste-formed SWCNT (a solid content rate was 2%), and the dispersion medium were subjected to a dispersion mixing at 3000 rpm with a disper, so that the first paste was manufactured. At the second step, a stirring granulator was used and thus the graphite particles, the CMC, and the PAA were subjected to a dry mixing. The first paste, a powder mix obtained by the dry mixing, and the dispersion medium (the water) were subjected to a thick kneading. The solid content rate at the thick kneading time was 65%. Into the mixture on which the thick kneading was performed, the SBR and the dispersion medium (the water) were further added and then mixed. As described above, the negative electrode paste was manufactured. The manufactured negative electrode paste was applied to coat a surface of the copper foil whose thickness was 10 µm, and was dried, so that the negative electrode active material layer was formed. After the negative electrode active material layer was roll-pressed, the obtained sheet was processed to have a predetermined size. Other than this, a material and procedure similar to Practical example 1 were used, so that the negative electrode sheet of the present example was obtained.

### [Comparative example 2]

As the first particles, the Si-C composite particles (A) were used. As the second particles, the Si-C composite particles (B) were used. On the Si-C composite particles (A) and the Si-C composite particles (B), the LiF coating layer was not formed. Other than this, a material and procedure similar to Practical example 1 were used, so that the negative electrode sheet of the present example was obtained.

### [Comparative example 3]

For preparing the first particles, the Si-C composite particles (B) were used as the core particles, and the adding time of the ammonium fluoride solution was set to be 60 minutes. For preparing the second particles, the Si-C composite particles (A) were used as the core particles, and the adding time of the ammonium fluoride solution was set to be 120 minutes. Other than this, a material and procedure similar to Practical example 1 were used, so that the negative electrode sheet of the present example was obtained.

### [Comparative example 4]

As the second particles, the Si-C composite particles (B) were used. On the Si-C composite particles (B), the LiF coating layer was not formed. Other than this, a material and procedure similar to Practical example 1 were used, so that the negative electrode sheet of the present example was obtained.

### [Comparative example 5]

As the first particles, the Si-C composite particles (A) were used. On the Si-C composite particles (A), the LiF coating layer was not formed. Other than this, a material and procedure similar to Practical example 1 were used, so that the negative electrode sheet of the present example was obtained.

### [Comparative example 6]

For preparing the first particles, the Si-C composite particles (G) was used as the core particles, and the adding time of the ammonium fluoride solution was set to be 240 minutes. For preparing the second particles, the Si-C composite particles (H) were used as the core particles. Other than those, a material and procedure similar to Practical example 1 were used, so that the negative electrode sheet of the present example was obtained.

### <Electrode plate expansion rate evaluation>

The thickness of the negative electrode of each practical example and each comparative example was measured. This thickness was treated as an initial thickness (T0). With this negative electrode, a lithium ion secondary battery for evaluation was manufactured as described below.

LiNi_{1/3}Co_{1/3}Mn_{1/3}O₂ (NCM) as the positive electrode active material powder, acetylene black (AB) as the electrically conducting material, and polyvinylidene fluoride (PVdF) as the binder were mixed at a mass ratio being NCM : AB : PVdF = 100 : 1 : 1 with N-methylpyrrolidone (NMP), so that the positive electrode paste was prepared. This paste was applied to coat a surface of the aluminum foil whose thickness was 15 µm and was dried, so that the positive electrode active material layer was formed. After the positive electrode active material layer was subjected to the rolling press, the obtained sheet was processed to have a predetermined size, so that the positive electrode sheet was obtained.

A separator made from a porous polyolefin was prepared. To each of the above manufactured negative electrode sheet and positive electrode sheet, a lead was attached, and then the resultants were laminated via the separator, so that the electrode assembly was manufactured. This was accommodated together with the nonaqueous electrolytic solution in a case configured with an aluminum laminate film. As the nonaqueous electrolytic solution, a solution was used in which the LiPF6 was dissolved as the supporting salt at a concentration being 1.0 mol/L into a mixed solvent containing the ethylene carbonate (EC), the fluoro ethylene carbonate (FEC), the ethyl methyl carbonate (EMC), and the dimethyl carbonate (DMC) at a volume ratio being 15 : 5 : 40 : 40. After that, the case was sealed, so that the lithium ion secondary battery for evaluation was obtained.

Next, each lithium ion secondary battery for evaluation manufactured above was kept under an environment being at 25°C. Each lithium ion secondary battery for evaluation was subjected to the constant current electrical charge by the current value being 0.4 C till 4.2 V, and then subjected to the constant voltage electrical charge till the current value reached 0.1 C. Next, each lithium ion secondary battery for evaluation was subjected to the constant current electrical discharge by the current value being 0.4 C till 2.5 V.

The electrical charge and discharge, in which the above described electrical charge and discharge was treated as 1 cycle, was repeated to satisfy 250 cycles. The battery after the 250 cycles was discharged till 2.5 V. After that, each lithium ion secondary battery for evaluation was disassembled under an argon atmosphere, the negative electrode was immersed into the DMC to be washed, and then the resultant was dried. Then, the thickness of the negative electrode was measured, and then this thickness was treated as a thickness after the electrical charge and discharge cycle (T1). An increasing rate (%) of the negative electrode thicknesses before and after the electrical charge and discharge cycle was calculated by (T1/T0 - 1) x 100. The results are shown at "Increasing rate (%)" column of Table 1. Incidentally, here, an example whose increasing rate was less than 33% is evaluated that the swell of the negative electrode in response to the electrical charge and discharge cycle was suppressed.

### [Table 1]

**Table 1**

| | First particles | | Second particles | | Ratio of Si content rate* | Electrode configuration | Increasing rate (%) |
|---|---|---|---|---|---|---|---|
| | LiF coating layer | First LiF intensity ratio | LiF coating layer | Second LiF intensity ratio | | | |
| Practical example 1 | Presence | 0.632 | Presence | 0.362 | 0.7 | Second layer | 27 |
| Practical example 2 | Presence | 0.524 | Presence | 0.376 | 0.8 | Second layer | 28 |
| Practical example 3 | Presence | 0.742 | Presence | 0.312 | 0.4 | Second layer | 30 |
| Comparative example 1 | Presence | 0.632 | Presence | 0.362 | 0.7 | First layer | 39 |
| Comparative example 2 | Absence | - | Absence | - | 0.7 | Second layer | 36 |
| Comparative example 3 | Presence | 0.362 | Presence | 0.632 | 1.5 | Second layer | 41 |
| Comparative example 4 | Presence | 0.632 | Absence | - | 0.7 | Second layer | 33 |
| Comparative example 5 | Absence | - | Presence | 0.362 | 0.7 | Second layer | 36 |
| Comparative example 6 | Presence | 1.420 | Presence | 0.312 | 0.3 | Second layer | 38 |

| | | | | | | | |
|---|---|---|---|---|---|---|---|
| * Si content rate of second particles / Si content rate of first particles | | | | | | | |

As shown by Table 1, in Practical examples 1 to 3, the swell of the negative electrode in response to the electrical charge and discharge cycle was suppressed. As described above, in Practical example 1 to Practical example 3, the first particles were contained in a layer at the negative electrode current collector side of the negative electrode active material layer and the second particles were contained in a layer at the surface layer side. The Si content rate of the second particles is smaller than the Si content rate of the first particles. The ratio of the peak intensity of the F of the LiF with respect to the peak intensity of the F of one being other than the LiF on the XPS spectrum of the second particle was smaller than the ratio of the peak intensity of the F of the LiF with respect to the peak intensity of the F of one being other than the LiF on the XPS spectrum of the first particle, and a difference between them was 0.050 to 1.00.

Above, specific examples of the present disclosure have been explained in detail, but these are merely illustrative, and are not construed as limiting the scope of the appended claims. The technique recited in claims contains matters in which the above-illustrated specific example is variously deformed or changed.

In short, the negative electrode of the secondary battery of the present disclosure, a manufacturing method of it, and the secondary battery are represented by Items [1] to [10].
[1] A negative electrode of a secondary battery, comprising:
   a negative electrode current collector; and
   a negative electrode active material layer that is supported by the negative electrode current collector, wherein
   the negative electrode active material layer comprises a first layer positioned at a side of the negative electrode current collector and a second layer positioned at a surface layer side,
   the first layer comprises a first Si-containing particle as a negative electrode active material,
   the second layer comprises a second Si-containing particle as the negative electrode active material,
   a Si content rate of the second Si-containing particle is smaller than a Si content rate of the first Si-containing particle,
   each of the first Si-containing particle and the second Si-containing particle comprises a LiF coating layer, and
   when, on an XPS spectrum of the first Si-containing particle measured by a X-ray photoelectron spectroscopy, a ratio of a peak intensity of an F of a LiF with respect to the peak intensity of the F of one being other than the LiF is defined as a first peak intensity ratio, and on an XPS spectrum of the second Si-containing particle, the ratio of the peak intensity of the F of the LiF with respect to the peak intensity of the F of one being other than the LiF is defined as a second peak intensity ratio, the second peak intensity ratio is smaller than the first peak intensity ratio, and a difference between the first peak intensity ratio and the second peak intensity ratio is equal to or more than 0.050 and not more than 1.00.
[2] The negative electrode recited in [1], wherein
   the Si content rate of the second Si-containing particle with respect to the Si content rate of the first Si-containing particle is equal to or more than 0.3 and not more than 0.9.
[3] The negative electrode recited in [1] or [2], wherein
   the Si content rate of the first Si-containing particle is equal to or more than 30 mass% and not more than 80 mass%, and
   the Si content rate of the second Si-containing particle is equal to or more than 20 mass% and not more than 70 mass%.
[4] The negative electrode recited in any one of [1] to [3], wherein
   the first peak intensity ratio is equal to or more than 0.450 and not more than 1.00.
[5] The negative electrode recited in any one of [1] to [4], wherein
   the second peak intensity ratio is equal to or more than 0.200 and less than 0.450.
[6] The negative electrode recited in any one of [1] to [5], wherein
   the first Si-containing particle and the second Si-containing particle comprise a Si-C composite particle comprising a carbon base material and comprising a Si contained at an inside of the carbon base material and comprise the LiF coating layer arranged at least on a part of a surface of the Si-C composite particle.
[7] The negative electrode recited in any one of [1] to [6], wherein
   the first layer and the second layer further comprise a graphite particle, as the negative electrode active material, that substantially does not comprise a Si.
[8] A manufacturing method of a negative electrode of a secondary battery, comprising:
   preparing a first paste that comprises a first Si-containing particle as a negative electrode active material and comprises a dispersion medium;
   preparing a second paste that comprises a second Si-containing particle as the negative electrode active material and comprises the dispersion medium;
   applying the first paste to coat a negative electrode current collector and to dry so as to form a dry layer of the first paste;
   applying the second paste to coat the dry layer of the first paste and to dry so as to form a dry layer of the second paste; and
   pressing the dry layer of the first paste and the dry layer of the second paste, wherein
   a Si content rate of the second Si-containing particle is smaller than a Si content rate of the first Si-containing particle,
   each of the first Si-containing particle and the second Si-containing particle comprises a LiF coating layer, and
   when, on an XPS spectrum of the first Si-containing particle measured by a X-ray photoelectron spectroscopy, a ratio of a peak intensity of an F of a LiF with respect to the peak intensity of the F of one being other than the LiF is defined as a first peak intensity ratio, and on an XPS spectrum of the second Si-containing particle, the ratio of the peak intensity of the F of the LiF with respect to the peak intensity of the F of one being other than the LiF is defined as a second peak intensity ratio, the second peak intensity ratio is smaller than the first peak intensity ratio, and a difference between the first peak intensity ratio and the second peak intensity ratio is equal to or more than 0.050 and not more than 1.00.
[9] The manufacturing method recited in [8], wherein
   the preparing the first paste comprises preparing the first Si-containing particle,
   the preparing the second paste comprises preparing the second Si-containing particle,
   at the preparing the first Si-containing particle and the preparing the second Si-containing particle,
   a Si-C composite particle, comprising a carbon base material and comprising a Si comprised at an inside of the carbon base material, is prepared, and
   by making the Si-C composite particle react with a water-soluble lithium salt and a fluorinated agent in a state where the Si-C composite particle is dispersed into a water or a water-soluble organic solvent so as to generate a LiF, the first Si-containing particle and the second Si-containing particle are prepared.
[10] A secondary battery, comprising:
   a positive electrode;
   a negative electrode; and
   an electrolyte, wherein
   the negative electrode is the negative electrode recited in any one of [1] to [7].

## Claims

1. A negative electrode (60) of a secondary battery (100), comprising:
a negative electrode current collector (62); and
a negative electrode active material layer (64) that is supported by the negative electrode current collector (60), wherein
the negative electrode active material layer (64) comprises a first layer (64a) positioned at a side of the negative electrode current collector (62) and a second layer (64b) positioned at a surface layer side,
the first layer (64a) comprises first Si-containing particles (12) as a negative electrode active material,
the second layer (64b) comprises second Si-containing particles (14) as the negative electrode active material,
a Si content rate of the second Si-containing particles (14) is smaller than a Si content rate of the first Si-containing particles (12),
each of the first Si-containing particles (12) and the second Si-containing particles (14) comprise a LiF coating layer, and
when, on an XPS spectrum of the first Si-containing particles (12) measured by a X-ray photoelectron spectroscopy, a ratio of a peak intensity of an F of a LiF with respect to the peak intensity of the F of one being other than the LiF is defined as a first peak intensity ratio, and on an XPS spectrum of the second Si-containing particles (14), the ratio of the peak intensity of the F of the LiF with respect to the peak intensity of the F of one being other than the LiF is defined as a second peak intensity ratio, the second peak intensity ratio is smaller than the first peak intensity ratio, and a difference between the first peak intensity ratio and the second peak intensity ratio is equal to or more than 0.050 and not more than 1.00.

2. The negative electrode (60) according to claim 1, wherein
the Si content rate of the second Si-containing particles (14) with respect to the Si content rate of the first Si-containing particles (12) is equal to or more than 0.3 and not more than 0.9.

3. The negative electrode (60) according to claim 1, wherein
the Si content rate of the first Si-containing particles (12) is equal to or more than 30 mass% and not more than 80 mass%, and
the Si content rate of the second Si-containing particles (14) is equal to or more than 20 mass% and not more than 70 mass%.

4. The negative electrode (60) according to claim 1, wherein
the first peak intensity ratio is equal to or more than 0.450 and not more than 1.00.

5. The negative electrode (60) according to claim 1, wherein
the second peak intensity ratio is equal to or more than 0.200 and less than 0.450.

6. The negative electrode (60) according to any one of claims 1 to 5, wherein
the first Si-containing particles (12) and the second Si-containing particles (14) comprise Si-C composite particles comprising a carbon base material and comprising Si contained at inside of the carbon base material and comprise the LiF coating layer arranged at least on a part of a surface of the Si-C composite particles.

7. The negative electrode (60) according to any one of claims 1 to 5, wherein
the first layer (64a) and the second layer (64b) further comprise graphite particles (16,18), as the negative electrode active material, that substantially do not comprise a Si.

8. A manufacturing method of a negative electrode (60) of a secondary battery (100),
comprising:
preparing a first paste that comprises first Si-containing particles (12) as a negative electrode active material and comprises a dispersion medium;
preparing a second paste that comprises second Si-containing particles (14) as the negative electrode active material and comprises the dispersion medium;
applying the first paste to coat a negative electrode current collector and to dry so as to form a dry layer of the first paste;
applying the second paste to coat the dry layer of the first paste and to dry so as to form a dry layer of the second paste; and
pressing the dry layer of the first paste and the dry layer of the second paste, wherein
a Si content rate of the second Si-containing particles (14) is smaller than a Si content rate of the first Si-containing particles (12),
each of the first Si-containing particles (12) and the second Si-containing particles (14) comprises a LiF coating layer, and
when, on an XPS spectrum of the first Si-containing particles (12) measured by a X-ray photoelectron spectroscopy, a ratio of a peak intensity of an F of a LiF with respect to the peak intensity of the F of one being other than the LiF is defined as a first peak intensity ratio, and on an XPS spectrum of the second Si-containing particles (14), the ratio of the peak intensity of the F of the LiF with respect to the peak intensity of the F of one being other than the LiF is defined as a second peak intensity ratio, the second peak intensity ratio is smaller than the first peak intensity ratio, and a difference between the first peak intensity ratio and the second peak intensity ratio is equal to or more than 0.050 and not more than 1.00.

9. The manufacturing method according to claim 8, wherein
the preparing the first paste comprises preparing the first Si-containing particles (12),
the preparing the second paste comprises preparing the second Si-containing particles (14),
at the preparing the first Si-containing particles (12) and the preparing the second Si-containing particles (14),
Si-C composite particles, comprising a carbon base material and comprising Si comprised at inside of the carbon base material, is prepared, and
by making the Si-C composite particles react with a water-soluble lithium salt and a fluorinated agent in a state where the Si-C composite particles is dispersed into a water or a water-soluble organic solvent so as to generate a LiF, the first Si-containing particles (12) and the second Si-containing particles are prepared (14).

10. A secondary battery (100), comprising:
a positive electrode (50);
a negative electrode (60); and
an electrolyte, wherein
the negative electrode (60) is the negative electrode (60) according to claim 1.
